# FASCICULE DE BREVET EUROPEEN

(11) **EP 1 385 410 B1**
(45) Date de publication et mention de la délivrance du brevet: **28.07.2004**
(21) Numéro de dépôt: 02738221.7
(22) Date de dépôt: 07.05.2002
(51) Int. Cl.: A47J 27/21, A47J 36/10

(54) **DISPOSITIF DE FERMETURE APTE A OBSTRUER UNE OUVERTURE D'UN RECIPIENT EN PARTICULIER D'UNE BOUILLOIRE**
VERSCHLUSSVORRICHTUNG ZUM SCHLIESSEN EINER BEHÄLTERÖFFNUNG, BESONDERS EINES KESSELS
CLOSURE DEVICE FOR CLOSING A CONTAINER OPENING, IN PARTICULAR A KETTLE

(30) Priorité: 09.05.2001 FR 0106137
(43) Date de publication de la demande: 04.02.2004
(73) Titulaire: SEB SA, 74150 Ecully (FR)
(72) Inventeur: MAGNOULOUX, Guy, F-74000 ANNECY (FR); DELIENS, Patrick, F-39700 Dampierre (FR)
(74) Mandataire: Pichat, Thierry
(86) Numéro de dépôt international: PCT/FR2002/001572
(87) Numéro de publication internationale: WO 2002/089645

(56) Documents cités:
- DE-A- 19 517 623
- DE-U- 29 521 376
- DE-U- 29 902 995

## Description

La présente invention se rapporte aux dispositifs de fermeture aptes à venir obstruer une ouverture d'un récipient, en particulier à usage ménager et culinaire.

On connaît de nombreux dispositifs de fermeture, notamment dans le domaine des couvercles de bouilloire.

Par exemple, on connaît un dispositif dont le couvercle est réuni au corps du récipient par un élément de faible épaisseur en matière plastique facilement déformable, permettant l'articulation du couvercle par rapport au récipient. La fermeture se fait par encliquetage du à la déformation locale de la matière.

Ces dispositifs ont le grand avantage d'être très bon marché étant donné qu'ils sont généralement en une seule pièce. Ils ont cependant l'inconvénient de ne pas être suffisamment fiable, le système d'encliquetage par déformation de matière réalisant un verrouillage de qualité aléatoire que différents paramètres peuvent aggraver (usure, température d'utilisation...)

Par ailleurs, on connaît des dispositifs fiables assurant un bon verrouillage mais qui sont composés de nombreuses pièces nécessaires pour garantir ce verrouillage de grande qualité. Par conséquent, ces dispositifs engendrent un coût de fabrication beaucoup plus important.

De plus, dans de nombreux cas, la multiplication du nombre de pièces va de pair avec la complexité de celles-ci.

Par exemple, la demande FR 2 696 087 décrit un récipient muni de premiers moyens de verrouillage, et un couvercle auquel des bras sont fixés de manière mobile, des seconds moyens de verrouillage, aptes à coopérer avec les premiers moyens de verrouillage, étant fixés à ces bras.

L'inconvénient de tous les dispositifs actuels est d'être soit de bon marché mais de procurer un verrouillage de qualité peu fiable (dont la fiabilité a tendance à se dégrader avec l'usage), soit de procurer un verrouillage de grande qualité mais nécessitant un nombre important de pièces, ce qui entraîne un coût de fabrication élevé.

Le problème posé est de réaliser un dispositif de fermeture comportant peu de pièces constitutives et étant d'une grande fiabilité.

La présente invention a ainsi pour objet un dispositif de fermeture apte à venir obstruer une ouverture d'un corps principal définissant un récipient par rotation autour d'un axe de rotation perpendiculaire à l'axe d'ouverture; ce dispositif comporte un couvercle, des éléments de verrouillage disposés à proximité de l'ouverture, et des éléments complémentaires de verrouillage disposés sur le couvercle et coopérant avec les éléments de verrouillage de telle sorte qu'ils maintiennent le couvercle sur l'ouverture dans une position verrouillée ; selon l'invention, le dispositif de fermeture comprend un dispositif d'articulation apte à mouvoir le couvercle par rapport à l'ouverture, d'une part, en translation, dans une direction perpendiculaire à l'axe d'ouverture, et, d'autre part, en rotation, autour de l'axe de rotation perpendiculaire à la direction de translation, les éléments de verrouillage, les éléments complémentaires de verrouillage et le dispositif d'articulation étant conformés de telle sorte que le couvercle passe, par translation par rapport à l'ouverture, de sa position verrouillée à une position fermée libérée et, par rotation autour de l'axe de rotation, de sa position fermée libérée à sa position ouverte.

Dans un mode de réalisation particulier de l'invention, le dispositif d'articulation comprend une fente, s'étendant dans la direction de translation, et à l'intérieur de laquelle est disposé un arbre, formant l'axe de rotation, apte à coulisser dans cette direction, la fente étant réalisée dans l'une des structures parmi le corps principal et le couvercle, et l'arbre étant solidaire de l'autre des deux structures.

La présente invention présente l'avantage de posséder un nombre très restreint de pièces constitutives tout en assurant un verrouillage tout aussi efficace et fiable que ceux réalisés par les dispositifs complexes et coûteux utilisés auparavant.

Le mouvement de verrouillage suivant l'invention est assuré par l'ensemble du dispositif de fermeture lui-même et garantit une bonne fermeture.

De plus, les pièces constitutives du dispositif de fermeture selon la présente invention ne présentent aucune forme complexe, ce qui facilite leur fabrication et leur manoeuvre.

D'autres particularités et avantages apparaîtront dans la description qui va suivre, dans laquelle l'exemple de réalisation est celui adapté à un récipient de type bouilloire électrique.

Aux dessins annexés, donnés uniquement à titre d'exemples non limitatifs :
- la figure 1 représente une vue en coupe d'un dispositif de fermeture d'une bouilloire selon la présente invention, le couvercle étant en position verrouillé ;
- la figure 2 représente une vue similaire à la figure 1, le couvercle étant en position fermée libérée ;
- la figure 3 représente une vue similaire aux figures 1 et 2, le couvercle étant en position légèrement ouverte ;
- la figure 4 représente une vue similaire aux figures 1 à 3, le couvercle étant en position de repos ;
- la figure 5 représente un second mode de réalisation du dispositif apte à empêcher le mouvement de translation du couvercle dans le sens du déverrouillage ;
- la figure 6 représente un troisième mode de réalisation du dispositif apte à empêcher le mouvement de translation du couvercle dans le sens du déverrouillage.

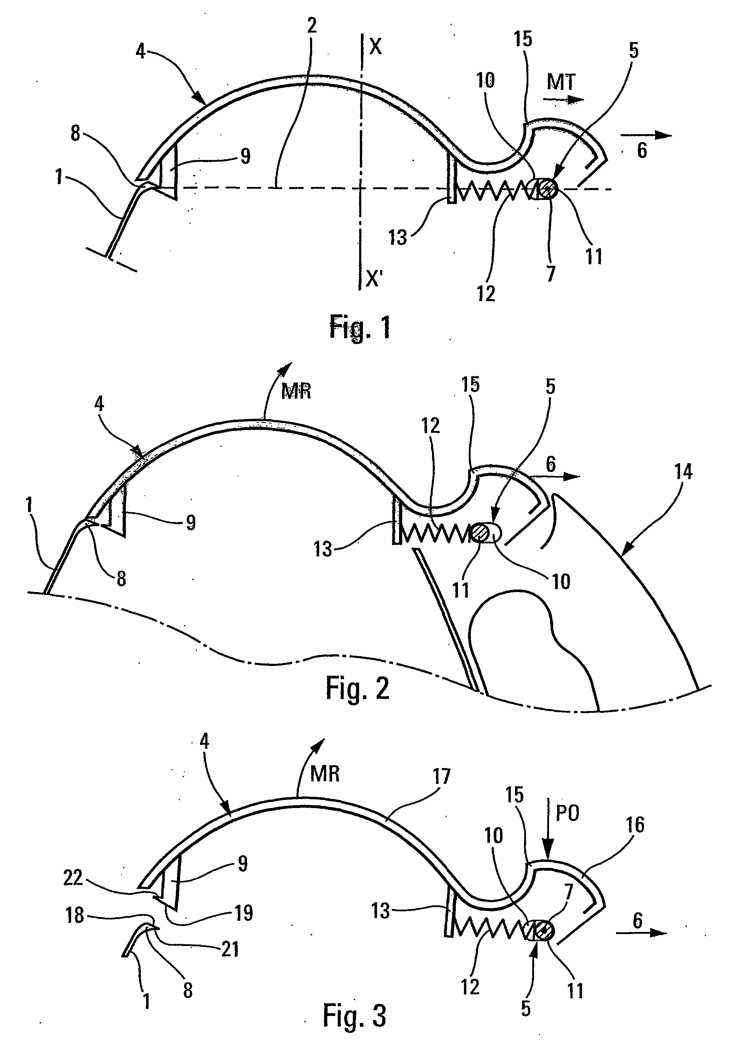

Comme on peut le voir à la figure 1, une bouilloire comprend un corps principal 1 définissant un récipient à l'intérieur duquel le liquide à bouillir est introduit.

Ce corps principal 1 possède une ouverture 2, par laquelle est introduit le liquide, définissant un axe XX', normal au plan de l'ouverture 2.

La bouilloire comprend aussi un couvercle 4, apte à obstruer l'ouverture 2, mobile entre une position fermée et verrouillée sur cette ouverture 2 et une position entièrement ouverte.

Le corps principal 1 et le couvercle 4 sont liés par un dispositif d'articulation 5 qui assure la mobilité du couvercle 4 par rapport au corps principal 1.

Ce mouvement se décompose en une translation dans une direction de translation 6, perpendiculaire à l'axe XX', et en une rotation autour d'un axe de rotation 7, perpendiculaire à l'axe XX' et à la direction de translation 6.

Des éléments de verrouillage 8 sont disposés à proximité de l'ouverture 2, sur le corps principal 1.

Des éléments complémentaires de verrouillage 9 sont solidarisés au couvercle 4.

Les éléments de verrouillage 8 et les éléments complémentaires de verrouillage 9 sont disposés de telles sorte qu'ils permettent de maintenir le couvercle 4 en position verrouillé afin d'obstruer efficacement l'ouverture 2.

Dans le mode de réalisation illustré par les figures 1 à 4, le dispositif d'articulation 5 comprend une fente 10 réalisée dans le couvercle 4, et un arbre 11, formant l'axe de rotation 7, lié au corps principal 1, mais cela pourrait être l'inverse, la fente étant alors réalisée dans le corps principal et l'arbre étant lié au couvercle.

La fente 10 qui s'étend dans la direction de translation 6 est disposée de manière coulissante par rapport à l'arbre 11 dans cette direction 6 ; mais dans d'autres modes de réalisation, comme indiqué ci-dessus, ce peut être l'inverse.

Afin d'avoir une ouverture importante, le dispositif d'articulation 5 est logé à proximité de la circonférence du couvercle 4 et de la poignée 14 du corps principal 1 permettant de manipuler la bouilloire.

Dans le mode de réalisation illustré par les figures 1 à 4, les éléments de verrouillage 8 et les éléments complémentaires de verrouillage 9 sont disposés le plus éloigné du dispositif d'articulation 5. Il serait toutefois possible de disposer ces éléments 8, 9 sur chaque paroi latérale du corps principal 1 et du couvercle 4, respectivement.

Comme on peut le voir à la figure 1 représentant le couvercle en position verrouillée, les éléments de verrouillage 8 et les éléments complémentaires de verrouillage 9 interdisent toute ouverture par rotation.

Dans le mode de réalisation illustré, les éléments de verrouillage 8 et les éléments complémentaires de verrouillage 9 sont constitués d'au moins un crochet 8 et un crochet complémentaire 9.

Le crochet 8 comporte une surface d'accrochage 21 et une surface de repos 18. De même, le crochet complémentaire 9 comporte une surface complémentaire d'accrochage 22 et une surface complémentaire de repos 19.

La surface de repos 18 du crochet 8 (relié au corps principal 1) est située au dessus de la surface d'accrochage 21. A contrario, la surface complémentaire de repos 19 du crochet complémentaire 9 (relié au couvercle 4) est située au dessous de la surface complémentaire d'accrochage 22.

A la figure 1, le couvercle 4 étant en position verrouillée, la surface d'accrochage 21 du crochet 8 et celle 22 du crochet complémentaire 9 sont positionnées l'une contre l'autre, la surface d'accrochage complémentaire 22 étant située sous la surface d'accrochage 21 alors que le couvercle 4 auquel est solidarisé le crochet complémentaire 9 est situé sur le corps principal 1 auquel est solidarisé le crochet 8. De ce fait, toute ouverture par rotation est interdite.

Dans un mode particulier de réalisation, le dispositif de fermeture comporte un dispositif apte à empêcher le mouvement de translation du couvercle 4 dans le sens du déverrouillage.

Ce dispositif peut être un ressort 12, disposé au niveau de dispositif d'articulation 5, sollicitant en permanence, la translation du couvercle 4 vers sa position verrouillée, et empêchant ainsi le couvercle 4 de passer dans sa position fermée libérée.

Le ressort 12 a une première extrémité qui est liée à l'arbre 11 solidaire du corps principal 1, et une deuxième extrémité qui est liée à un bras 13 solidaire du couvercle 4.

Le ressort 12 impose d'une part, une répulsion permanente entre le bras 13 et l'arbre 11 et, d'autre part, la translation du couvercle 4 dans le sens du verrouillage.

En position verrouillée, sous l'action du ressort 12, l'extrémité de la fente 10 proche de la poignée 14 est en butée contre l'arbre 11.

Pour mettre le couvercle 4 dans sa position entièrement ouverte, l'utilisateur doit, premièrement agir à l'encontre du ressort 12 par un mouvement de translation MT du couvercle 4 par rapport à l'ouverture afin de déverrouiller la fermeture, et deuxièmement, faire basculer le couvercle 4 par un mouvement de rotation MR autour de l'arbre 11 formant l'axe de rotation 7.

Afin de faciliter le mouvement de translation MT, le couvercle 4 est muni d'un système de préhension 15.

La figure 2 représente le couvercle 4 en position fermée, mais libérée des contraintes imposés par le crochet 8 et le crochet complémentaire 9. En effet, la surface d'accrochage 21 du crochet 8 n'est plus en contact avec la surface d'accrochage complémentaire 22 du crochet complémentaire 9, et aucun dispositif n'empêche la rotation du couvercle 4.

Suite au mouvement de translation MT, la fente 10 a coulissé par rapport à l'arbre 11 et son extrémité éloignée de la poignée 14 est en butée contre l'arbre 11.

Cette translation MT a donc libéré éléments de verrouillage 8 des éléments complémentaires de verrouillage 9, rendant possible le mouvement de rotation MR du couvercle autour de l'axe de rotation 7.

Pour faire pivoter l'arbre 11 à l'intérieur de la fente 10, l'utilisateur impose une pression d'ouverture PO sur la partie arrière 16 du couvercle 4 située entre l'arbre 11 et l'extrémité du couvercle la plus proche de la poignée 14, de telle sorte que cette partie arrière 16 rentre à l'intérieur du corps principal 1 de la bouilloire. Par un effet de levier, la partie avant 17 du couvercle 4, située de l'autre côté de l'arbre 11, se soulève.

La figure 3 représente le couvercle 4 légèrement ouvert.

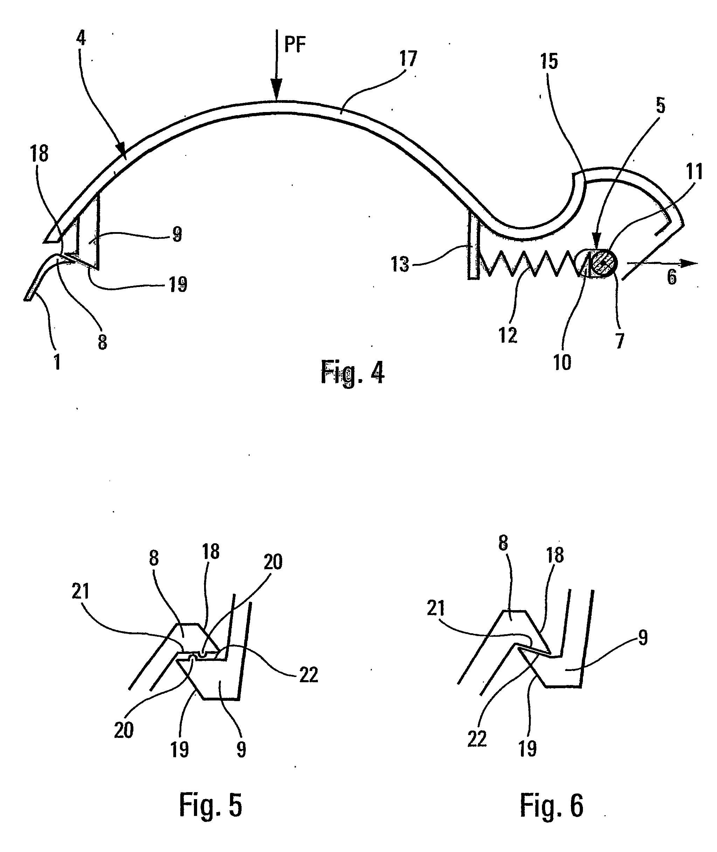

Afin de fermer l'ouverture 2, l'utilisateur fait pivoter le couvercle 4 dans le sens de la fermeture, le crochet complémentaire 9 reposant sur le crochet 8 (figure 4).

A partir de cette position de repos, le verrouillage peut être réalisé par la translation du couvercle 4 dans la direction opposée à la sollicitation du ressort 12, ce qui décale le crochet complémentaire 9 par rapport au crochet 8, puis par la rotation du couvercle 4 dans le sens de la fermeture, ce qui permet de positionner le couvercle 4 dans sa position fermée libérée, enfin par le relâchement du couvercle 4, le ressort 12 entraînant le couvercle 4 dans sa position verrouillée.

Comme on peut le voir à la figure 4, le crochet 8 et le crochet complémentaire 9 sont conformés de telle façon qu'ils permettent au couvercle 4 de passer de sa position de repos à sa position verrouillée par encliquetage quand l'utilisateur impose une pression de fermeture PF sur la partie avant 17 du couvercle 4.

En effet, quand le couvercle 4 est en position de repos, la surface complémentaire de repos 19 du crochet complémentaire 9 repose sur la surface de repos 18 du crochet 8.

La surface de repos 18 et la surface complémentaire de repos 19 sont inclinées dàns un sens tel que la fente 10 puisse coulisser par rapport à l'arbre 11, dans le sens du déverrouillage, quand une pression de fermeture PF est appliquée sur le couvercle 4 en position de repos, le couvercle passant alors de sa position de repos à sa position verrouillée.

Ainsi, suite à la pression de fermeture PF, grâce à l'inclinaison de la surface de repos 18, à celle de la surface complémentaire de repos 19, et au coulissement de l'arbre 11 dans la fente 10, le couvercle 4 subit, en fonction de la diminution de l'angle de rotation d'ouverture, une translation progressive dans le sens opposée à la sollicitation du ressort 12.

Quand la partie supérieure de la surface complémentaire de repos 19 n'est plus en butée contre la surface de repos 18, le ressort 12 impose son mouvement de translation, ce qui positionne le crochet 8 et le crochet complémentaire 9 dans leur configuration de verrouillage (figure 1).

La figure 5 illustre un autre mode de réalisation selon lequel la surface d'accrochage 21 du crochet 8 et la surface d'accrochage complémentaire 22 du crochet complémentaire 9 comprennent, chacune, une nervures 20.

Ces nervures 20, par la relative élasticité du crochet 8 et du crochet complémentaire 9, sont aptes, par encliquetage de l'une avec l'autre, à empêcher le mouvement de translation MT du couvercle 4 dans le sens du déverrouillage.

Ainsi ces nervures 20 peuvent être utilisées de manière alternative ou complémentaire avec le ressort 12 dont la fonction est aussi d'éviter toute translation du couvercle 4 dans le sens de déverrouillage.

La figure 6 illustre un autre mode de réalisation selon lequel la surface d'accrochage 21 et la surface complémentaire d'accrochage 22 sont inclinées dans un sens tel que le passage par translation de la position fermée libérée à la position fermée verrouillée se fait par encliquetage.

Ainsi cette inclinaison la surface d'accrochage 21 et la surface complémentaire d'accrochage 22 peut être aussi utilisée de manière alternative ou complémentaire avec le ressort 12 dont la fonction est aussi d'éviter toute translation du couvercle 4 dans le sens de déverrouillage.

De nombreuses autres variations peuvent être apportées aux modes de réalisation décrit en accord avec les figures annexées sans sortir du cadre de l'invention.

Il est ainsi possible de munir la partie avant 17 du couvercle 4 d'un élément du type poignée permettant à l'utilisateur d'ouvrir le couvercle 4 sans utiliser le principe du levier.

Il est aussi possible de réaliser la fente 10 du dispositif d'articulation 5 dans le corps principal 1, l'arbre 11 étant relié au couvercle 4 et le ressort 12 ayant une première extrémité en butée contre l'arbre 11 lié au couvercle 4, et une deuxième extrémité liée à un bras solidaire du corps principal 1.

Il est aussi possible de réaliser les éléments de verrouillage 8 et le dispositif d'articulation 5, non pas sur le corps principal 1 définissant le récipient, mais sur une structure à l'intérieure de laquelle un récipient peut être logé de façon amovible.

Il est aussi possible de réaliser un couvercle 4 ne comportant pas de dispositif apte à l'immobiliser dans sa position verrouillée.

Il est évident que le dispositif de fermeture selon la présente invention peut avoir des applications autres que dans les bouilloires et autres récipients similaires, le mode de réalisation décrit en accord avec les figures n'étant qu'un exemple n'ayant aucun caractère limitatif.

## Revendications

1. Dispositif de fermeture apte à venir obstruer une ouverture (2) d'un corps principal (1) définissant un récipient, par rotation autour d'un axe de rotation (7) perpendiculaire à l'axe d'ouverture (XX'), ce dispositif comportant un couvercle (4), des éléments de verrouillage (8) disposés à proximité de l'ouverture (2), et des éléments complémentaires de verrouillage (9) disposés sur le couvercle (4) et coopérant avec les éléments de verrouillage (8) de telle sorte qu'ils maintiennent le couvercle (4) sur l'ouverture (2) dans une position verrouillée, **caractérisé en ce qu'**il comprend un dispositif d'articulation (5) apte à mouvoir le couvercle (4) par rapport à l'ouverture (2), d'une part, en translation, dans une direction de translation (6) perpendiculaire à l'axe d'ouverture (XX'), et, d'autre part, en rotation, autour de l'axe de rotation (7) perpendiculaire à la direction de translation (6), les éléments de verrouillage (8), les éléments complémentaires de verrouillage (9) et le dispositif d'articulation (5) étant conformés de telle sorte que le couvercle (4) passe, par translation par rapport à l'ouverture (2), de sa position verrouillée à une position fermée libérée et, par rotation autour de l'axe de rotation (7), de sa position fermée libérée à sa position ouverte.

2. Dispositif de fermeture selon la revendication 1, **caractérisé en ce que** le dispositif d'articulation (5) comprend une fente (10), s'étendant dans la direction de translation (6), et à l'intérieur de laquelle est disposé un arbre (11), formant l'axe de rotation (7), apte à coulisser dans cette direction (6), la fente (10) étant réalisée dans l'une des structures parmi le corps principal (1) et le couvercle (4), et l'arbre (11) étant solidaire de l'autre des deux structures (1, 4).

3. Dispositif de fermeture selon la revendication 1 ou 2, **caractérisé en ce que** le dispositif d'articulation (5) est disposé à proximité de la circonférence du couvercle (4) et d'une poignée (14) du corps principal (1).

4. Dispositif de fermeture selon l'une des revendications 1 à 3, **caractérisé en ce que** les éléments de verrouillage (8) sont constitués par au moins un crochet (8) comportant une surface d'accrochage (21) et les éléments complémentaires de verrouillage (9) sont constitués par au moins un crochet complémentaire (9) comportant une surface complémentaire d'accrochage (22), les deux surfaces d'accrochage (21, 22) étant positionnées l'une contre l'autre quand le couvercle (4) est dans sa position verrouillée.

5. Dispositif de fermeture selon l'une des revendication 1 à 4, **caractérisé en ce qu'**il comporte un dispositif (12, 20) apte à empêcher le mouvement de translation du couvercle (4) dans le sens du déverrouillage.

6. Dispositif de fermeture selon la revendication 5, **caractérisé en ce qu'**il comporte un ressort (12) sollicitant en permanence la translation du couvercle (4) dans le sens du verrouillage.

7. Dispositif de fermeture selon la revendication 4 et l'une des revendications 5 ou 6, **caractérisé en ce** la surface d'accrochage (21) et la surface complémentaire d'accrochage (22) sont inclinées dans un sens tel que le passage par translation de la position fermée à la position verrouillée se fait par encliquetage.

8. Dispositif de fermeture selon la revendication 4 et l'une des revendications 5 à 7, **caractérisé en ce** la surface d'accrochage (21) et la surface complémentaire d'accrochage (22) comportent chacune au moins une nervure (20) apte à empêcher le mouvement de translation du couvercle (4) dans le sens du déverrouillage.

9. Dispositif de fermeture selon l'une des revendications 4 à 8, **caractérisé en ce que** le crochet (8) comporte une surface de repos (18) située au-dessus de la surface d'accrochage (21) et le crochet complémentaire (9) comporte une surface complémentaire de repos (19) située au-dessous de la surface complémentaire d'accrochage (22), le crochet (8) et le crochet complémentaire (9) sont conformés de telle façon que le couvercle (4) passe, par encliquetage, de sa position de repos dans laquelle la surface complémentaire de repos (19) repose sur la surface de repos (18), à sa position verrouillée.

10. Dispositif de fermeture selon la revendication 9, **caractérisé en ce que** la surface de repos (18) et la surface complémentaire de repos (19) sont inclinées dans un sens tel que l'arbre (11) puisse coulisser dans la fente (10) dans le sens du déverrouillage quand le couvercle (4) passe de sa position de repos à sa position verrouillée.

## Patentansprüche

1. Verschlussvorrichtung, die geeignet ist, eine Öffnung (2) eines einen Behälter definierenden Hauptkörpers (1) zu verschließen durch Drehung um eine senkrecht zu der Öffnungsachse (XX') liegende Drehachse (7), wobei diese Vorrichtung einen Deckel (4), in der Nähe der Öffnung (2) angeordnete Verriegelungselemente (8) und auf dem Deckel (4) angeordnete komplementäre Verriegelungselemente (9) umfasst, welche mit den Verriegelungselementen (8) derart zusammenwirken, dass sie den Deckel (4) auf der Öffnung (2) in einer verriegelten Position halten, **dadurch gekennzeichnet, dass** sie eine Gelenkvorrichtung (5) aufweist, die dazu in der Lage ist, den Deckel (4) bezüglich der Öffnung (2) einerseits in Translation in eine senkrecht zu der Öffnungsachse (XX') liegende Translationsrichtung (6) und andererseits in Drehung um die senkrecht zu der Translationsrichtung (6) liegende Drehachse (7) zu bewegen, wobei die Verriegelungselemente (8), die komplementären Verriegelungselemente (9) und die Gelenkvorrichtung (5) derart ausgebildet sind, dass sich der Deckel (4) durch Translation bezüglich der Öffnung (2) aus seiner verriegelten Position in eine freigegebene verschlossene Position und durch Drehung um die Drehachse (7) aus seiner freigegebenen verschlossenen Position in seine offene Position bewegt.

2. Verschlussvorrichtung gemäß Anspruch 1, **dadurch gekennzeichnet, dass** die Gelenkvorrichtung (5) einen sich in Translationsrichtung (6) erstreckenden Schlitz (10) aufweist, in dessen Innerem eine die Drehachse (7) bildende Welle (11) angeordnet ist, die in dieser Richtung (6) gleiten kann, wobei der Schlitz (10) in einer der von dem Hauptkörper (1) und dem Deckel (4) gebildeten Strukturen ausgebildet ist, und wobei die Welle (11) einstückig mit der anderen der beiden Strukturen ausgebildet ist.

3. Verschlussvorrichtung gemäß Anspruch 1 oder 2, **dadurch gekennzeichnet, dass** die Gelenkvorrichtung (5) in der Nähe des Umfangs des Deckels (4) und eines Griffs (14) des Hauptkörpers (1) angeordnet ist.

4. Verschlussvorrichtung gemäß einem der Ansprüche 1 bis 3, **dadurch gekennzeichnet, dass** die Verriegelungselemente (8) von zumindest einem Haken (8) mit einer Einhakfläche (21) und die komplementären Verriegelungselemente (9) von zumindest einem komplementären Haken (9) mit einer komplementären Einhakfläche (22) gebildet sind, wobei die beiden Einhakflächen (21, 22) gegeneinander anliegend angeordnet sind, wenn sich der Deckel (4) in seiner verriegelten Position befindet.

5. Verschlussvorrichtung gemäß einem der Ansprüche 1 bis 4, **dadurch gekennzeichnet, dass** sie eine Vorrichtung (12, 20) aufweist, welche dazu geeignet ist, die Translationsbewegung des Deckels (4) in der Entriegelungsrichtung zu verhindern.

6. Verschlussvorrichtung gemäß Anspruch 5, **dadurch gekennzeichnet, dass** sie eine Feder (12) umfasst, welche die Translation des Deckels (4) in der Verriegelungsrichtung dauerhaft vorspannt.

7. Verschlussvorrichtung gemäß Anspruch 4 und einem der Ansprüche 5 oder 6, **dadurch gekennzeichnet, dass** die Einhakfläche (21) und die komplementäre Einhakfläche (22) in einer Richtung derart geneigt sind, dass der Übergang durch Translation aus der geschlossenen Position in die verriegelte Position durch Einrasten geschieht.

8. Verschlussvorrichtung gemäß Anspruch 4 und einem der Ansprüche 5 bis 7, **dadurch gekennzeichnet, dass** die Einhakfläche (21) und die komplementäre Einhakfläche (22) jeweils zumindest eine Rippe (20) aufweisen, welche die Translationsbewegung des Deckels (4) in der Entriegelungsrichtung verhindern kann.

9. Verschlussvorrichtung gemäß einem der Ansprüche 4 bis 8, **dadurch gekennzeichnet, dass** der Haken (8) eine oberhalb der Einhakfläche (21) angeordnete Ruhefläche (18) aufweist und der komplementäre Haken (9) eine unterhalb der komplementären Einhakfläche (22) angeordnete komplementäre Ruhefläche (19) aufweist, und dass der Haken (8) und der komplementäre Haken (9) derart ausgebildet sind, dass sich der Deckel (4) durch Einrasten aus seiner Ruheposition, in welcher die komplementäre Ruhefläche (19) auf der Ruhefläche (18) ruht, in seine verriegelte Position bewegt.

10. Verschlussvornchtung gemäß Anspruch 9, **dadurch gekennzeichnet, dass** die Ruhefläche (18) und die komplementäre Ruhefläche (19) in einer solchen Richtung geneigt sind, dass die Welle (11) in der Entriegelungsrichtung in dem Schlitz (10) gleiten kann, wenn sich der Deckel (4) aus seiner Ruheposition in seine verriegelte Position bewegt.

## Claims

1. Closure device suitable for obstructing an opening (2) of a main body (1) defining a receptacle, by rotation about an axis of rotation (7) perpendicular to the axis of opening (XX'), this device comprising a lid (4), locking elements (8) situated in the vicinity of the opening (2), and complementary locking elements (9) situated on the lid (4) and engaging with the locking elements (8) in such a way that they keep the lid (4) on the opening (2) in a locked position, the said device being **characterized in that** it comprises a hinge device (5) suitable for moving the lid (4) relative to the opening (2) both translationally, in a direction of translational movement (6) perpendicular to the axis of opening (XX'), and rotationally, about the axis of rotation (7) extending perpendicular to the direction of translational movement (6), the locking elements (8), the complementary locking elements (9) and the hinge device (5) being so shaped that the lid (4) moves, by translational movement relative to the opening (2), from its locked position to a released closed position, and, by rotation about the axis of rotation (7), from its released closed position to its open position.

2. Closure device according to Claim 1, **characterized in that** the hinge device (5) comprises a slot (10) extending in the direction of translational movement (6), in which slot is a pin (11) forming the axis of rotation (7) and able to slide in this direction (6), the slot (10) being formed in one structure selected from either the main body (1) or the lid (4), and the pin (11) being integral with the other of the two structures (1, 4).

3. Closure device according to Claim 1 or 2, **characterized in that** the hinge device (5) is situated in the vicinity of the circumference of the lid (4) and of a handle (14) of the main body (1).

4. Closure device according to one of Claims 1 to 3, **characterized in that** the locking elements (8) consist of at least one hook (8) having a hook surface (21), and the complementary locking elements (9) consist of at least one complementary hook (9) having a complementary hook surface (22), the two hook surfaces (21, 22) being positioned against each other when the lid (4) is in its locked position.

5. Closure device according to one of Claims 1 to 4, **characterized in that** it comprise a device (12, 20) suitable for preventing the lid (4) moving translationally in the unlocking direction.

6. Closure device according to Claim 5, **characterized in that** it has a spring (12) permanently urging the lid (4) to move translationally in the locking direction.

7. Closure device according to Claim 4 and either of Claims 5 and 6, **characterized in that** the hook surface (21) and the complementary hook surface (22) are inclined in a direction such that the transition by translational movement from the closed position to the locked position involves a click.

8. Closure device according to Claim 4 and one of Claims 5 to 7, **characterized in that** the hook surface (21) and the complementary hook surface (22) each have at least one rib (20) suitable for preventing the lid (4) moving translationally in the unlocking direction.

9. Closure device according to one of Claims 4 to 8, **characterized in that** the hook (8) has a rest surface (18) situated above the hook surface (21) and the complementary hook (9) has a complementary rest surface (19) situated below the complementary hook surface (22), and the hook (8) and the complementary hook (9) are so shaped that the lid (4) moves, with a click, from its rest position in which the complementary rest surface (19) is resting on the rest surface (18), to its locked position.

10. Closure device according to Claim 9, **characterized in that** the rest surface (18) and the complementary rest surface (19) are inclined in a direction such that the pin (11) can slide within the slot (10) in the unlocking direction when the lid (4) moves from its rest position to its locked position.
